# EUROPEAN PATENT SPECIFICATION

(11) **EP 2 127 291 B1**
(45) Date of publication and mention of the grant of the patent: **16.10.2019**
(21) Application number: 07846408.8
(22) Date of filing: 10.12.2007
(51) Int. Cl.: H04L 29/06

(54) **A MULTIPROTOCOL WIND TURBINE SYSTEM AND METHOD**
MEHRPROTOKOLL-WINDTURBINENSYSTEM UND VERFAHREN
SYSTÈME D'ÉOLIENNE MULTIPROTOCOLE ET PROCÉDÉ CORRESPONDANT

(30) Priority: 12.12.2006 DK 200601631
(43) Date of publication of application: 02.12.2009
(73) Proprietor: Vestas Wind Systems A/S, 8200 Aarhus N (DK)
(72) Inventor: RASMUSSEN, Keld, 7400 Herning (DK)
(86) International application number: PCT/DK2007/000538
(87) International publication number: WO 2008/071189

(56) References cited:
- WO-A-01/77525
- US-A1- 2002 090 001
- US-A1- 2004 230 377

## Description

### BACKGROUND OF THE INVENTION

The strategically distributed nature of wind power presents unique challenges. A wind park comprises several wind turbines located on- or offshore, and often covers large geographic areas.

These factors usually require a variety of networked interconnections and telecommunication technologies for monitoring and controlling wind power electric generating facilities referred to as SCADA (SCADA: Supervisory Control And Data Acquisition).

Wind turbines over different SCADA networks often communicate via different communication protocols and are often proprietary dependent to the manufacturer. This fact makes it very complicated for owners and operators to integrate different types of wind turbines e.g. in a wind park with a central control.

To solve this problem, a new IEC (IEC: International Electro technical Commission) standard "IEC 61400-25" is made that defines all details required to connect wind power plant components in a multi-vendor environment and to exchange the information made available by a component. The standard includes wind power plant specific information, the mechanisms for information exchange, the mapping to communication protocols, and the system configuration. The standard defines or describes a number of communication protocols. To support the standard, a wind turbine must support one of the predefined communication protocols. IEC 61400-25 is developed in order to provide a uniform communications basis for the monitoring and control of wind power plants. It defines wind power plant specific information, the mechanisms for information exchange, the mapping to communication protocols, and the system configuration. In this regard the standard defines all details required to connect wind power plant components in a multi-vendor environment and to exchange all information of the components.

International patent application WO2005/055538 discloses a method and a system for transmitting data via a data bus including a gateway for converting data into data in a format according to a specific standard (IEC 61850). A similar solution has been developed with reference to the IEC 61400-25 standard. A problem related to such use of converters along the communication line between the wind turbines is that the gateway may represent a subject to single point failure. If the gateway breaks down, all wind turbines that are connected to the gateway are out of reach, communication-wise.

Moreover, such conversion may result in loss of information as a conversion into a certain format evidently must include that an output format is restricted to fit the relevant protocol.

WO0177525 discloses a Supervisory Command and Data Acquisition (SCADA) system for managing wind turbines for electric power generation. One implementation includes a SCADA element at each wind turbine, configured to collection data and provide an interface to control the turbine and communicate with other parts of the system; a SCADA element at a substation, configured to collect data from the substation, to communicate with other parts of the system, and to store substation data locally; a SCADA element at each meteorological site, configured to collect meteorological data from sensors on and at a meteorology tower, to communicate with other parts of the system, and to store meteorology tower, to communicate with other parts of the system, and to store meteorology data locally; a data communication network; a server coupled over the network with the wind turbines, the substation, and the meteorological sites through their respective the SCADA elements; and a user interface through which authorized users can exercise command and control functions.

US2002090001 discloses a wireless hub for use in an electric utility substation, said hub providing two-way wireless communications digital information between the hub and associated IEDs. The hub includes a protocol processor, a data processor and a Scada processor. The data processor exchanging two-way digital information with IEDs using protocols of said IEDs. The Scada processor exchanges two-way digital information with an external source having its own protocol, and the protocol processor converts two-way digital information between protocols of said IEDs and the protocol of an external source. The hub includes circuits that permit any one of the three processors to select either of the other two processors to exchange digital information with the chosen processor.

US2004230377 discloses a wind power management system to monitor performance of wind turbine generators situated in wind farms, each having a number of wind turbine generators. A real-time wind power portfolio manager receives and stores in real-time data being produced by the wind turbine generator parks. The manager has a reporting module for generating profile reports for the performance of the wind turbine generators. The manager has a server to provide the reports on-line regarding the wind turbine generators. The server stores the real-time data to enable the reports to be based on the history of the project for each one of the parks.

### SUMMARY OF THE INVENTION

The invention is defined by a wind turbine according to independent claim 1 and a method according to independent claim 12.Further embodiments are defined in the dependent claims

The invention relates to a Wind turbine comprising at least two communication protocol handlers (PH), said protocol handlers (PH) comprising means for generating and interpreting SCADA related data (SCADA: Supervisory Control And Data Acquisition) according to an associated communication protocol, and-wherein said at least two protocol handlers (PH) are associated to different communication protocols. and wherein said protocol handlers are comprised by a SCADA interface. Moreover, it may be possible to design a wind turbine which may fit into virtually most environments.

The present invention presents a wind turbine supporting at least two of the protocols defined in the IEC 61400-25 by means of several protocol handlers - a multi-protocol wind turbine. This is a very advantageous feature in that the same type of wind turbine may operate with different operators using different communication protocols, e.g. in different wind parks. The SCADA related data may, according to the invention, be any data that is related to monitoring and/or control of wind turbines.

Another very advantageous feature of an embodiment of the present invention is that a multi-protocol wind turbine may be surveyed and/or controlled by different systems of different protocols. For example a utilities company may wish to have direct access to a wind turbine for reasons of surveillance or monitoring of the wind turbine. This is normally only possible if the utilities company has hardware and/or software based system running the same protocol as the wind turbine currently runs. In accordance with the present invention it is possible for the utilities company to contact the wind turbine by means of a system running another protocol than the current protocol of the wind turbine. This is very beneficial in that no special software or hardware needs to be installed at a third party e.g. a utilities company to communicate with a wind turbine of the present invention to obtain monitoring or control.

The protocol handlers may, according to an embodiment of the invention, be devices that comprise a protocol encoder and decoder according to one or several specific communication protocols. Means for generating SCADA related data provides according to the invention means for wrapping data in a predefined way according to the current protocol. Means for interpreting SCADA related data provides in accordance with the present invention means for decoding the data according to the current protocol. Therefore, the term protocol handler may be understood as a protocol driver. The protocol handlers may be located outside or inside the wind turbine.

The term communication protocol is according to the present invention to be understood as a predetermined pattern of wrapping, encoding or decoding data to be transmitted via a data communication network.

In another advantageous embodiment of the invention, it is possible to utilize two different communication protocols simultaneously and hence obtain different communication priorities of the data. This way it is possible that e.g. critical data such as power control instruction data are transmitted faster to the wind turbine than non critical data such as a statistical temperature reading.

It should be noted that the at least two protocol handlers which both comprise means for generating and interpreting data evidently further may be comprised in one single unit e.g. a processor.

Another advantageous feature of having at least one protocol handler placed in relation to the operation of a wind turbine is that it eliminates the need for converting data transmitted to the wind turbine according to one protocol to a another specific protocol applied by the wind turbine. Because it is possible to transmit data to a wind turbine without converting, the transmission time from a central server to the wind turbine may be minimized or reduced. The minimization of transmission time may be very advantageous, in situations where e.g. a precise fault detection or power control is needed.

Another advantageous feature of having at least two protocol handler placed in a wind turbine in a wind power plant is that it gives freedom to easily integrate further substations or wind turbines in a wind power plant. As such further substations or wind turbines may be manufactured by different manufactures and therefore supporting different data protocols.
Examples of further substation integrated into the wind power plant may e.g. be distributed databases for storing measured data, further metrological stations or even further wind turbines from different manufactures.

In an embodiment of the invention, each of said at least two protocol handlers comprise means for receipt and transmission of one communication protocol.

In an embodiment of the invention, said at least two protocol handlers are comprised in a single expanded protocol handler comprising means for generating and interpreting SCADA related data.

According to an embodiment of the invention an expanded protocol handler may comprise means for handling several protocols. This may be done in different ways. An expanded protocol handler handles packets of different protocols and need thereby of necessity to know a packet defined in one protocol from another defined in another protocol. This functionality may be obtained by means of the expanded protocol handler detecting the protocol of relevant data packet by extracting protocol specific data from said relevant data packet and processing said relevant data packet according to said protocol specific data. Another way of obtaining this functionality according to an embodiment of the invention may be by means of at least two protocol handlers being merged in said expanded protocol handler comprising means for handling data of at least two different protocols within the expanded protocol handler, without determination of protocol type. The expanded protocol handler may in this way comprise means for interpreting and generating data packets of several protocols.

In an embodiment of the invention, said protocol handlers are comprised by a SCADA interface.

In accordance with the present invention, a SCADA interface may be any physical or software-based gateway or port that receives data e.g. via a cable. The SCADA interface may be physically or wirelessly linked with a SCADA server or a control station of a wind park.

In an embodiment of the invention, one of said different communication protocols is based on SOAP-based (Simple Object Access Protocol) web services. It should be noted that the SOAP-based web services also may be referred as XML web serviced.

In an embodiment of the invention, one of said at least two different communication protocols is the MMS protocol.

In an embodiment of the invention, the protocol handler simply converts the SCADA related data from the current protocol into an internal protocol or language of the wind turbine.

It is within the scope of the present invention that all protocol handlers may be assembled into one single expanded protocol handler PH.

One advantageous way of implementing this invention may be by applying a switch or configuration setting for switching between different protocols at the SCADA interface of a wind turbine. Hereby it is possible for e.g. a wind park operator during installation and calibration of a wind turbine to switch to the protocol of the current wind park. This is very advantageous in that the same type of wind turbine may be applied to different wind parks using different communication protocols and function without the need for any gateway. Furthermore, the wind park operator may change communication protocols of the wind park and still use the same wind turbines.

One very advantageous feature of implementing this invention in individual wind turbines in a wind power plant is that it gives the park administrator the opportunity to communicate directly to such individual wind turbine.

Another very advantageous feature of implementing this invention in each individual wind turbine in a wind power plant is that it eliminates the need of a protocol converter used as gateway to the wind power plant. The need of converting data from one protocol sent by e.g. a control station to another protocol supported by the wind turbines in the wind power plant may be subject to a single point failure. If the converter breaks down it is not possible to communicate to any of the wind turbines in the power plant.
In an embodiment of the invention, said at least two different SCADA protocols are comprised defined in the IEC 61400-25 standard.

In an embodiment of the invention, at least one of said protocol handlers is distributed in the wind turbine. This means that some functionality of the protocol handlers is distributed in different places of the wind turbine. There may e.g. be an embedded processor located in the tower performing the protocol interpretation.

Furthermore, the invention relates to a wind turbine comprising at least one SCADA interface (SI) to at least one external SCADA server (SCS),

Said SCADA interface (SI) communicating SCADA related data (SRD) and said SCADA interface comprises a multi-protocol SCADA interface enabling encoding and decoding of SCADA related data (SRD) according to at least two different SCADA protocols.

The present invention presents a wind turbine related to a SCADA interface supporting at least two of the protocols defined in the IEC 61400-25. This is a very advantageous feature in that the same type of wind turbine may operate with different operators using different communication protocols, e.g. in different wind parks. The SCADA related data may, according to the invention, be any data that is related to monitoring and/or control of wind turbines.

The SCADA server may, according to an embodiment of the present invention, be any server related to one or several wind turbines which is used for operating set points, sending commands, monitoring the system, storing historical data or may furthermore send power control instructions to the wind turbine. The SCADA server may be a server connected to at least one wind turbine or one or several of the wind turbines in a wind park.

In an embodiment of the invention, said SCADA server (SCS) is related to a wind park control station.

In an embodiment of the invention, said SCADA interface is located inside the wind turbine.

According to the invention a SCADA server may be related to a wind park control station which may be a central unit performing monitoring and control of the wind park.

A wind turbine according to the present invention may operate without any adaptation in any wind park matching the IEC 61400-25 standard. This is very advantageous due to the fact that the same type of wind turbine may be utilized in different wind parks. Moreover, it is possible for a wind park operator or owner to add one or more multi-protocol wind turbines according to the invention in a wind park comprising wind turbines from other vendors.

Furthermore, the invention relates to a multi protocol SCADA interface related to a wind turbine comprising
means for encoding data according to at least two different communication protocols,
and further comprising means for decoding data according to at least two different communication protocols.

In an embodiment of the invention, said at least two different protocols are part of the IEC 61400-25 standard.

In an embodiment of the invention, one of said at least two different communication protocols is defined by SOAP-based web services.

In an embodiment of the invention, one of said at least two different communication protocols is the MMS protocol.

In an embodiment of the invention, one of said at least two different communication protocols is the DNP3.

In an embodiment of the invention, one of said at least two different communication protocols is the IEC 60870-5-104 protocol.

In an embodiment of the invention, one of said at least two different communication protocols is the OPC-XML-DA protocol.

In an embodiment of the invention, one of said at least two different communication protocols is the GOOSE protocol.

In accordance with the present invention it is possible to support or understand at least two different data communication protocols.

Moreover, the invention relates to a method of generating and interpreting SCADA related data in a wind turbine according to at least two different SCADA related communication protocols comprising the steps of
- receiving a data packet in a protocol handler related to said wind turbine,
- determining the protocol type of said data packet,
- handling the data packet according to said protocol type,

In an embodiment of the invention, said method further comprising the step of generating a response according to said protocol type

In an embodiment of the invention, an expanded protocol handler detects the protocol type of a received data packet by extracting protocol defining data from said received data packet and processes said received data packet according to said protocol specific data.

In an embodiment of the invention, said protocol handler are comprised by a SCADA interface.

A protocol handler may, according to an embodiment of the invention, be devices that comprise a protocol encoder and decoder according to one or several specific communication protocols. Means for generating SCADA related data provides according to the invention means for wrapping data in a predefined way according to the current protocol. Means for interpreting SCADA related data provides in accordance with the present invention means for decoding the data according to the current protocol. Therefore, the term protocol handler may be understood as a protocol driver. The protocol handlers may be located outside or inside the wind turbine.

It is very advantageous feature in that the same type of wind turbine may operate with different operators using different communication protocols, e.g. in different wind parks. A protocol handler related to a wind turbine handles incoming data packets according to a protocol type. The handling of a data packet may according to an embodiment of the invention be understood as an interpretation of the data packet and an ensuring of that the data packet is processed correctly. Furthermore, the protocol handler comprises means for generating a response, i.e. establishment of data packets defined in the same communication protocol type. Evidently, the protocol handler may generate data packets of different protocols automatically.

Another very advantageous feature of an embodiment of the present invention is that a multi-protocol wind turbine may be surveyed and/or controlled by different systems of different protocols.

It should be noted that the at least two protocol handlers which both comprise means for generating and interpreting data evidently further may be comprised in one single unit e.g. a processor.

Moreover, the invention relates to a method of generating and interpreting SCADA related data in a wind turbine according to at least two different SCADA related communication protocols comprising the steps of
- receiving a data packet in a protocol handler related to said wind turbine,
- determining the protocol type of said data packet,
- handling the data packet according to said protocol type,

In an embodiment of the invention, said method further comprising the step of generating a response according to said protocol type.

Moreover, the invention relates to use of at least two different SCADA related communication protocols in a wind turbine.

### THE DRAWINGS

The invention will be described in the following with reference to the figures in which
- fig. 1: illustrates a large modern wind turbine as seen from the front,
- fig. 2: illustrates a simplified cross section of a nacelle,
- fig. 3: illustrates an overview of a typical wind park,
- fig. 4: illustrates a wind turbine, handling data from different protocols according to an embodiment of the invention,
- fig 5a: illustrates an example of a SCADA interface according to an embodiment of the invention,
- fig 5b: illustrates another example of a SCADA interface according to an embodiment of the invention,
- fig. 6: illustrates an example of how an expanded protocol handler may handle an incoming data packet, and
- fig. 7: illustrates another example of how an expanded protocol handler may handle an incoming data packet.

### DETAILED DESCRIPTION

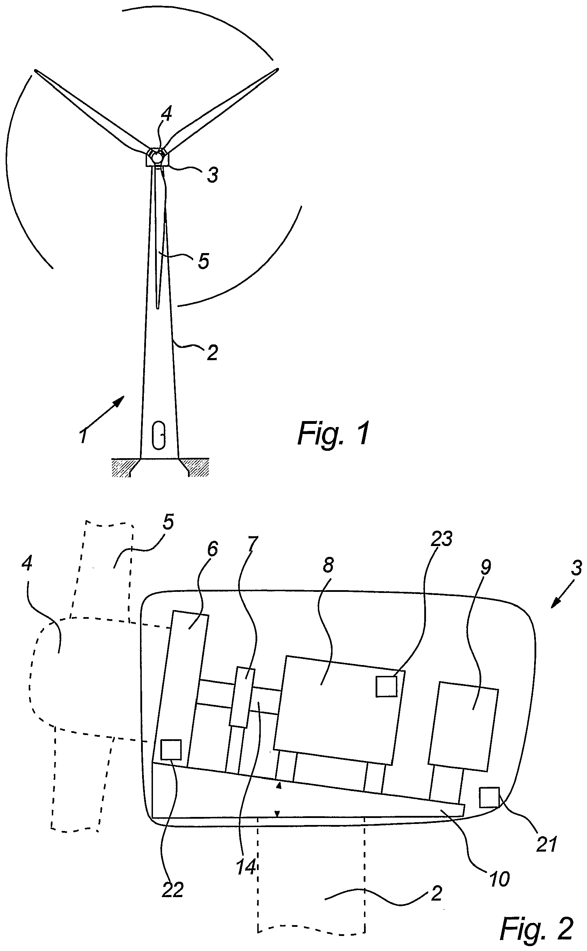

Figure 1 illustrates a modern wind turbine 1. The wind turbine 1 comprises a tower 2 positioned on a foundation. A wind turbine nacelle 3 with a yaw mechanism is placed on top of the tower 2.

A low speed shaft extends out of the nacelle front and is connected with a wind turbine rotor through a wind turbine hub 4. The wind turbine rotor comprises at least one rotor blade e.g. three rotor blades 5 as illustrated.

Figure 2 illustrates a simplified cross section of a nacelle 3, as seen from the side.

Nacelles 3 exists in a multitude of variations and configurations but in most cases the drive train 14 in the nacelle 3 almost always comprises one or more of the following components: a gear 6, a coupling (not shown), some sort of breaking system 7 and a generator 8. A nacelle 3 of a modern wind turbine 1 can also include a converter 9, an inverter (not shown) and additional peripheral equipment such as further power handling equipment, control systems, hydraulic systems, cooling systems and more.

The weight of the entire nacelle 3 including the nacelle components 6, 7, 8, 9 is carried by a load carrying structure 10. The components 6, 7, 8, 9 are usually placed on and/or connected to this common load carrying structure 10. In this simplified embodiment the load carrying structure 10 only extends along the bottom of the nacelle 3 e.g. in form of a bed frame to which some or all the components 6, 7, 8, 9 are connected.

A typical wind turbine may further comprise a number of sensors or meters, e.g. vibration sensor 21, gear oil thermometer 22 and generator thermometer 23. It is noted that many other sensors and meters for measuring conditions of wind turbines are comprised in a typical wind turbine.

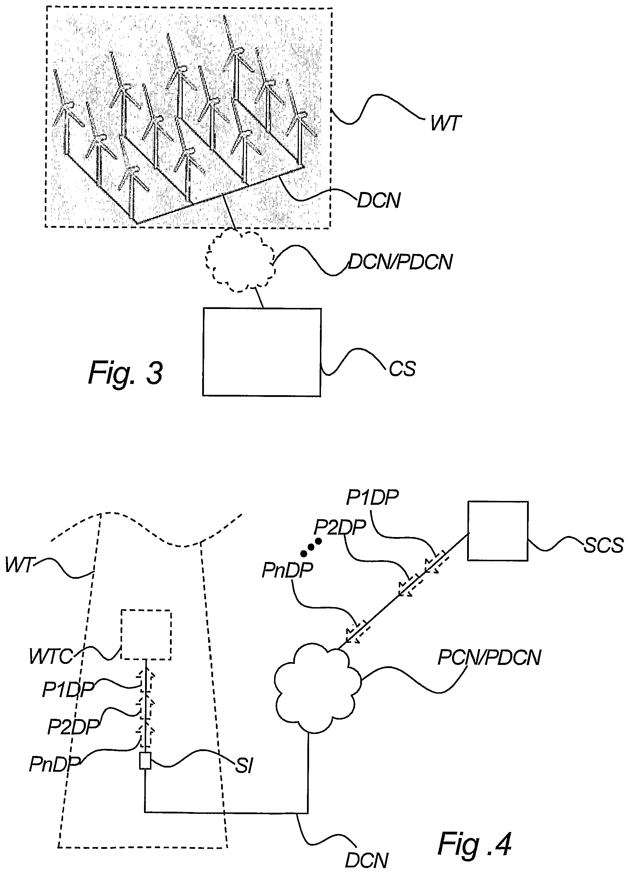

Figure 3 illustrates an overview of a typical wind farm according to the invention. A wind park comprises a number of wind turbines located in the same area in a group on- or offshore. The wind turbines may be assembled to constitute a total unified power producing unit that can be connected to the utility grid. A wind park typically has a master or control station CS wherein a Supervisory Control And Data Acquisition (SCADA) server may be located. The control station may comprise a number of computers which continuously monitor the condition of the wind turbine and collect statistics on its operation. The control station may also control a large number of switches, hydraulic pump valves, and motors within the wind turbine. The control stations may be connected to the wind park network DCN locally or remotely via a data communication network DCN or a public data communication network PDCN, e.g. the internet. Data packets comprising monitoring and control data are transmitted to and from the wind turbines WT via a data communication network DCN. The control data may typically be data to control a wind turbine. This may e.g. be instructions to a given wind turbine to change the maximum power output in case of a need for a reduction in the power produced. Simultaneously, the data communication network DCN is utilized for transmitting monitoring and control data to and from the wind turbines in the wind park. This may e.g. be a meter reading of the temperature of a wind turbine component. The data communication network DCN may e.g. comprise a local area network LAN and/or a public data connection network, e.g. the internet.

Figure 4 illustrates a wind turbine controller WTC related to a wind turbine WT according to an embodiment of the present invention. It should be noted that the present figure constitutes only one out of many examples of implementing the present invention. The figure further illustrates a SCADA interface SI, data packets of different protocols P1DP, P2DP, ..., PnDP, a data communication network DCN, a public data communication network PDCN and a SCADA server SCS.
The wind turbine controller WTC may be located inside or outside the wind turbine WT.

The figure illustrates that a device driver handles incoming data packets P1DP, P2DP, ..., PnDP, typically comprising SCADA related data, on a SCADA interface SI. These data packets P1DP, P2DP, ..., PnDP are according to the invention defined by different protocols. The data packets P1DP, P2DP, ..., PnDP may comprise e.g. requests or responses. Thus, the present figure illustrates that the SCADA interface SI supports several protocols, which in this figure is illustrated by a protocol 1 datapacket P1DP, a protocol 2 datapacket P2DP and a protocol n datapacket PnDP. The SCADA interface SI may transmit the incoming data packets to a control mechanism of the wind turbine, e.g. a wind turbine controller WTC, where after the instructions are to be executed in the wind turbine WT. This execution may e.g. comprise setting a value, influence on an actuator or reading a value of a meter in the wind turbine.

The wind turbine controller WTC is to be understood as the main control unit of a wind turbine. It may be located inside or outside the wind turbine.

The SCADA interface SI may in alternative embodiments of the invention be located outside the wind turbine controller or outside the wind turbine.

The decoding and encoding of data packets of different protocols may according to an embodiment of the invention be done with a subsequent translation of data packets into an internal wind turbine protocol.

The SCADA server SCS may be comprised in a control station CS and may be located local or remote to the wind turbine controller WTC. The SCADA server may be separated by a data communication network DCN or a public data communication network PDCN. The SCADA server is in an embodiment of the invention to be understood as any computer connected to the wind turbine communicating monitoring and/or control data, e.g. a PC (PC: Personal Computer) for surveillance of a wind turbine located at a utilities company.

The IEC 61400-25 presents a uniform information exchange system to eliminate problems of many different proprietary communication systems to which intercommunication is difficult or impossible. Thus, the IEC standard contributes homogeneity of the different types of SCADA systems.

The wind power plant specific information describes the crucial and common process data, meta-data (data about data, e. g. scale factor or engineering unit), and configuration data of a wind power plant. Process information is hierarchically structured and covers for example common process information found in the rotor, generator, converter, grid connection etc. The data may be simple (value, timestamp, and quality) or more comprehensive (adding more meta-data, for example engineering unit, scale, description, short hand reference, statistical and historical information of the process value). All information of a wind power plant defined in IEC 61400-25 is name tagged - it defines a comprehensive name space. A concise meaning of each signal is given. The standardized wind power plant information can be easily extended by means of a name space extension rule. All process and meta-data can be exchanged by corresponding services. Access to the metadata (including configuration information with regard to the wind power plant information model and services and communication stacks) provides the so-called self-description of a device.

The IEC 61400-25 allows SCADA systems to communicate with wind turbine controllers from multiple vendors. The standardized self-description (contained either in an XML file or retrieved online from a device) can be used to configure SCADA applications. Standardization of SCADA applications are excluded in IEC 61400-25 but standardized common wind turbine information provides means for reuse of applications and operator screens for wind turbines from different vendors. From a utility perspective unified definitions of common data minimize conversion and re-calculation of data values for evaluation and comparison of all their wind power plants.

The present invention presents a wind turbine related to a SCADA interface supporting at least two of the protocols defined in the IEC 61400-25. This is a very advantageous feature in that the same type of wind turbine may operate with different operators using different communication protocols, e.g. in different wind parks.

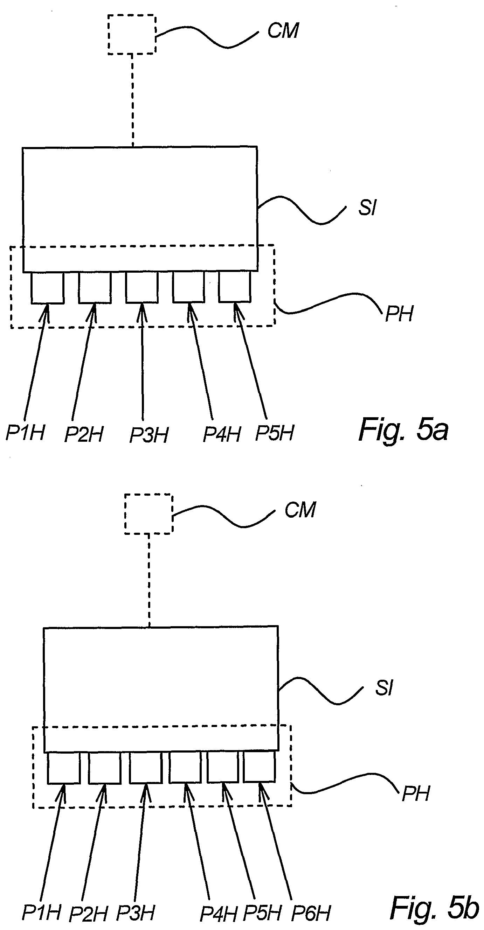

Figure 5a illustrates an example of a SCADA interface SI which in an embodiment of the invention supports input and output from five different protocols handled by different protocol handlers PH.

Protocol 1 handler PHI refers to means for interpreting web services which could be a software component that is described via WSDL(WSDL: Web service description language) and is capable of being accessed via standard network protocols such as, but not limited to, SOAP (SOAP: Simple Object Access Protocol) over HTTP (HTTP: hypertext transfer protocol). Thus, a web service is, according to the invention, a hosted application controlled through SOAP requests which returns results as SOAP responses.

Protocol 2 handler PH2 refers to means for interpreting the MMS (MMS: Manufacturing Message Specification) protocol. MMS is an ISO 9506 standard. Control Networks uses the MMS protocol and a reduced OSI stack with the TCP/IP protocol in the transport/network layer, and Ethernet and/or RS-232 as physical media. This means that all communication handling will be the same, regardless of network type and connected devices. The protocol defines communication messages transferred between controllers as well as between the engineering station and the controller (e.g. downloading an application or reading/writing variables).

Protocol 3 handler P3H refers to means for interpreting the DNP3 (DNP3: Distributed Network Protocol version 3). Data transmitted over DNP3 is typically process information required for operational purposes. DNP3 is a non-proprietary, standards-based communications protocol designed for maximum compatibility across a variety of networks.

Protocol 4 handler P4H refers to means for interpreting the IEC 60870-5-104 protocol which is a SCADA protocol specifically intended for electric power applications. It reports changes in the state of the monitored data points and can report time-stamps for these changes. It includes some power-system specific data types for monitoring some particular power devices (e.g. transformer tap positions) and has specific control types to ensure that only the correct output is changed when a command is issued. The protocol includes a concept of a current state for most data points but generally only reports the changes to those points.

Protocol 5 handler P5H refers to means for interpreting the OPC XML-DA (OLE (Object Linking and Embedding) for Process Control Data Access) protocol which based on XML and is used to provide both the data dissemination and control capabilities for the distributed data acquisition system.

The figure illustrates that different protocol handlers (P1H, P2H, P3H, P4H) may be comprised in a SCADA interface of a wind turbine. The Protocol handlers may, according to an embodiment of the invention, be devices that comprise both a protocol encoder and a protocol decoder according to their respective protocols. The encoder handles the wrapping of data in a predefined way according to the current protocol. The decoder handles the decoding of the data which means unwrapping of incoming data according to the current protocol. Therefore, the term protocol handler may be understood as a protocol driver. It should be noted that the protocol handlers (P1H, P2H, P3H, P4H) may be located anywhere in relation to a wind turbine.

The figure moreover illustrates that the SCADA interface communicates with control means CM for the wind turbine. This may e.g. be a wind turbine controller WTC or other means for controlling a wind turbine or elements of a wind turbine.
The five different protocols illustrated in this figure is not to be understood as limiting, merely as an example of five different protocols applicable within the scope of the present invention.

Figure 5b illustrates another example of a SCADA interface SI which in an embodiment of the invention supports input and output from six different protocols. This figure has the same elements as figure 5a, and additionally a protocol 6 handler P6H.

Protocol 6 handler P6H refers to means for interpreting the GOOSE (Generic Object-Oriented Substation Event) protocol, which is a protocol providing high-speed communication of wind turbine status changes over a substation local area network. The six different protocols illustrated in this figure are not to be understood as limiting, but merely as an example of six different protocols applicable within the scope of the present invention.

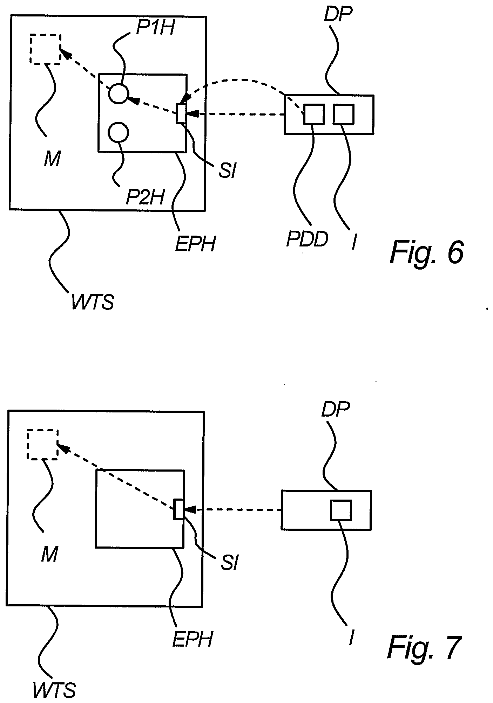

Figure 6 illustrates an example of how an expanded protocol handler EPH may handle an incoming data packet to a wind turbine system WTS according to an embodiment of the invention. The figure illustrates the following elements: A data packet DP, an instruction I, protocol defining data PDD, a SCADA interface SI, a wind turbine system WTS, an expanded protocol handler EPH, a protocol 1 handler P1H, a protocol 2 handler P2H and a meter M. The data packet DP may be any SCADA related data packet. The data packet DP comprises an instruction I which may e.g. be an instruction of measuring an element in the wind turbine. Furthermore the data packet DP comprises protocol defining data PDD which is part of the data packet defining which protocol the data packet is defined by. When the data packet DP enters the SCADA interface on the expanded protocol handler EPH, the protocol defining data PDD are extracted from the data packet DP and the data packet DP is forwarded to the correct protocol handler according to the protocol defining data PDD, in this case the protocol 1 handler P1H. It is by the protocol 1 handler P1H possible to interpret the data packet DP and to extract the correct instruction and process the instruction to the meter. The current protocol handler, in this exampled the protocol 1 handler P1H, of the expanded protocol handler EPH may generate a data packet of the same protocol as the incoming data packet DP and transmit this e.g. via the SCADA interface SI. In this example this may comprise a reply comprising measure data of the measured meter.

Figure 7 illustrates another example of how an expanded protocol handler EPH may handle an incoming data packet to a wind turbine system WTS according to an embodiment of the invention. The figure illustrates the following elements: A data packet DP, an instruction I, a SCADA interface SI, a wind turbine system WTS, an expanded protocol handler EPH and a meter M. The data packet DP may be any SCADA related data packet. The data packet DP comprises an instruction I which may e.g. be an instruction of measuring an element in the wind turbine. In this example the expanded protocol handler EPH is not extracting the protocol defining data PDD to determine the protocol. The expanded protocol handler EPH may intrinsically interpret the data packet and is thereby able to interpret and generate data packets of different protocols by means of recognizing and interpreting all instructions and data structures of several communication protocols. This way the expanded protocol handler EPH is in it self able to interpret the data packet DP and to extract the correct instruction and process the instruction to the meter. The expanded protocol handler is in it self able to generate a data packet of the same protocol as the incoming data packet DP and transmit this e.g. via the SCADA interface SI. In this example this may comprise a reply comprising measure data of the measured meter.

The term wind turbine system WTS may designate a wind turbine WT, a substation, combinations thereof or a wind power plant. The protocol handler PH or the expanded protocol handler EPH may in an embodiment of the invention be positioned in the housing of the wind turbine WT. According to an alternative embodiment of the invention the protocol handler may be distributed and executed on separate data processing circuitry as long as the protocol handler is associated to and functioning in relation to the wind turbine WT in question.

## Claims

1. Wind turbine (1) comprising at least two communication protocol handlers (PH), each of said protocol handlers comprising means for generating and interpreting Supervisory Control And Data Acquisition, SCADA, related data according to an associated communication protocol, wherein said at least two protocol handlers are associated to different communication protocols, and wherein said protocol handlers are comprised by a SCADA interface (SI), wherein the two different communication protocols are utilized simultaneously and have different communication priorities of the data.

2. Wind turbine according to claim 1, wherein each of said at least two protocol handlers comprise means for receipt and transmission of one communication protocol.

3. Wind turbine according to claim 1 or 2, wherein said at least two protocol handlers are comprised in a single expanded protocol handler (EPH) comprising means for generating and interpreting SCADA related data according to several communication protocols.

4. Wind turbine according to claim 3, wherein said expanded protocol handler (EPH) detects the communication protocol type of a received data packet by extracting communication protocol defining data from said received data packet and processes said received data packet according to said communication protocol specific data.

5. Wind turbine according to any of the claims 3 to 4, wherein said at least two protocol handlers (PH) are merged in said expanded protocol handler comprising means for handling data of at least two different communication protocols without specific determination of communication protocol type.

6. Wind turbine according to any of the claims 1-5, wherein one of said different communication protocols is based on Simple Object Access Protocol, SOAP-based web services.

7. Wind turbine according to any of the claims 1-6, wherein one of said at least two different communication protocols is one of the following: the Manufacturing Message Specification, MMS, the Object Linking and Embedding, OLE, for Process Control Data Access, OPC XML-DA, the Distributed Network Protocol version 3, DNP3, the International Electrotechnical Commission, IEC 60870-5-104 protocol or any combination thereof.

8. Wind turbine according to any of the claims 1-7, wherein at least one of said protocol handlers is distributed in the wind turbine (1).

9. Wind turbine according to any of the claims 1-8, comprising at least one SCADA interface (SI) to at least one external SCADA server (SCS),
said SCADA interface communicating SCADA related data and said SCADA interface comprises a multi-protocol SCADA interface enabling encoding and decoding of SCADA related data according to at least two different SCADA protocols.

10. Wind turbine according to claim 9, wherein said SCADA server is related to a wind park control station.

11. Wind turbine according to claim 9 or 10, wherein said SCADA interface server (SCS) is located inside the wind turbine.

12. Method of generating and interpreting Supervisory Control And Data Acquisition, SCADA related data in a wind turbine (1) according to any of the claims 1 to 11, where the generating and interpreting SCADA related data being performed by at least two communication protocol handlers (PH) according to at least two different communication protocols and wherein said protocol handlers are associated to different communication protocols and comprised by a SCADA interface (SI), wherein the two different communication protocols are utilized simultaneously and have different communication priorities of the data, the method comprising the steps of
- receiving a data packet in a protocol handler related to said wind turbine,
- determining the communication protocol type of said data packet,
- handling the data packet according to said communication protocol type.

13. Method of generating and interpreting SCADA related data according to claim 12, wherein said method further comprising the step of generating a response according to said communication protocol type.

14. Method of generating and interpreting SCADA related data according to claim 12 or 13, wherein an expanded protocol handler detects the commmunication protocol type of a received data packet by extracting communication protocol defining data from said received data packet and processes said received data packet according to said communication protocol specific data.

15. Method of generating and interpreting SCADA related data according to any of the claims 12-14, wherein said protocol handlers are comprised by a SCADA interface (SI).

## Patentansprüche

1. Windkraftanlage (1), umfassend mindestens zwei Kommunikationsprotokollhandhaber (PH), wobei jeder der Protokollhandhaber Mittel zum Generieren und Interpretieren von Daten, die Supervisory Control and Data Acquisition, SCADA, betreffen, gemäß eines zugeordneten Kommunikationsprotokolls, umfasst, wobei die mindestens zwei Protokollhandhaber zu unterschiedlichen Kommunikationsprotokollen zugeordnet sind, und wobei die Protokollhandhaber von einer SCADA-Schnittstelle (SI) umfasst sind, wobei die zwei unterschiedlichen Kommunikationsprotokolle gleichzeitig verwendet werden und unterschiedliche Kommunikationsprioritäten der Daten aufweisen.

2. Windkraftanlage nach Anspruch 1, wobei jeder der mindestens zwei Protokollhandhaber Mittel zum Empfangen und Übertragen eines Kommunikationsprotokolls umfasst.

3. Windkraftanlage nach Anspruch 1 oder 2, wobei die mindestens zwei Protokollhandhaber in einem einzelnen erweiterten Protokollhandhaber (EPH) umfasst sind, der Mittel zum Generieren und Interpretieren von SCADA-betreffenden Daten gemäß mehrerer Kommunikationsprotokolle umfasst.

4. Windkraftanlage nach Anspruch 3, wobei der erweiterte Protokollhandhaber (EPH) den Kommunikationsprotokolltyp eines empfangenen Datenpakets detektiert, indem er das Kommunikationsprotokoll definierende Daten aus dem empfangenen Datenpaket extrahiert und das empfangende Datenpaket gemäß der kommunikationsprotokollspezifischen Daten verarbeitet.

5. Windkraftanlage nach einem der Ansprüche 3 bis 4, wobei die mindestens zwei Protokollhandhaber (PH) in dem erweiterten Protokollhandhaber, der Mittel zum Handhaben von mindestens zwei unterschiedlichen Kommunikationsprotokollen ohne spezifische Bestimmung des Kommunikationsprotokolltyps umfasst, zusammengeführt sind.

6. Windkraftanlage nach einem der Ansprüche 1-5, wobei eines der unterschiedlichen Kommunikationsprotokolle auf Simple Object Access Protocol, SOAP-basierenden Netzdiensten basiert.

7. Windkraftanlage nach einem der Ansprüche 1-6, wobei eines der mindestens zwei unterschiedlichen Kommunikationsprotokolle eines der folgenden ist: das Manufacturing Message Specification, MMS, das Object Linking and Embedding, OLE, für Process Control Data Access, OPC XML-DA, das Distributed Network Protocol Version 3, DNP3, das International Electrotechnical Commission, IEC 60870-5-104 Protokoll oder eine Kombination davon.

8. Windkraftanlage nach einem der Ansprüche 1-7, wobei mindestens einer der Protokollhandhaber in der Windkraftanlage (1) verteilt ist.

9. Windkraftanlage nach einem der Ansprüche 1-8, umfassend mindestens eine SCADA-Schnittstelle (SI) zu mindestens einem externen SCADA-Server (SCS),
wobei die SCADA-Schnittstelle SCADA-betreffende Daten kommuniziert und die SCADA-Schnittstelle eine Multi-Protokoll-SCADA-Schnittstelle umfasst, die ein Kodieren und Dekodieren von SCADA-betreffenden Daten gemäß mindestens zwei unterschiedlichen SCADA-Protokollen ermöglicht.

10. Windkraftanlage nach Anspruch 9, wobei der SCADA-Server mit einer Windparksteuerstation in Beziehung steht.

11. Windkraftanlage nach Anspruch 9 oder 10, wobei der SCADA-Schnittstellenserver (SCS) sich im Inneren der Windkraftanlage befindet.

12. Verfahren zum Generieren und Interpretieren von Daten, die Supervisory Control and Data Acquisition, SCADA, betreffen, in einer Windkraftanlage (1) nach einem der Ansprüche 1 bis 11, wobei das Generieren und Interpretieren von SCADA-betreffenden Daten von mindestens zwei Kommunikationsprotokollhandhabern (PH) gemäß mindestens zwei unterschiedlichen Kommunikationsprotokollen durchgeführt wird, und wobei die Protokollhandhaber unterschiedlichen Kommunikationsprotokollen zugeordnet sind und von einer SCADA-Schnittstelle (SI) umfasst sind, wobei die zwei unterschiedlichen Kommunikationsprotokolle gleichzeitig verwendet werden und unterschiedliche Kommunikationsprioritäten der Daten aufweisen, wobei das Verfahren die folgenden Schritte umfasst:
- Empfangen eines Datenpakets in einem Protokollhandhaber, der mit der Windkraftanlage in Beziehung steht,
- Bestimmen des Kommunikationsprotokolltyps des Datenpakets,
- Handhaben des Datenpakets gemäß dem Kommunikationsprotokolltyp.

13. Verfahren zum Generieren und Interpretieren von SCADA-betreffenden Daten nach Anspruch 12, wobei das Verfahren weiter den Schritt des Generierens einer Antwort gemäß dem Kommunikationsprotokolltyp umfasst.

14. Verfahren zum Generieren und Interpretieren von SCADA-betreffenden Daten nach Anspruch 12 oder 13, wobei ein erweiterter Protokollhandhaber den Kommunikationsprotokolltyp eines empfangenen Datenpakets detektiert, indem er das Kommunikationsprotokoll definierende Daten aus dem empfangenen Datenpaket extrahiert und das empfangende Datenpaket gemäß der kommunikationsprotokollspezifischen Daten verarbeitet.

15. Verfahren zum Generieren und Interpretieren von SCADA-betreffenden Daten nach einem der Ansprüche 12-14, wobei die Protokollhandhaber von einer SCADA-Schnittstelle (SI) umfasst sind.

## Revendications

1. Éolienne (1) comprenant au moins deux gestionnaires de protocole de communication (PH), chacun desdits gestionnaires de protocole comprenant un moyen pour produire et interpréter des données liées à un Système d'Acquisition et de Contrôle de Données, SCADA, selon un protocole de communication associé, dans laquelle lesdits au moins deux gestionnaires de protocole sont associés à des protocoles de communication différents, et dans laquelle lesdits gestionnaires de protocole sont compris par une interface SCADA (SI), dans laquelle les deux protocoles de communication différents sont utilisés simultanément et ont des priorités de communication différentes des données.

2. Éolienne selon la revendication 1, dans laquelle chacun desdits au moins deux gestionnaires de protocole comprend un moyen pour la réception et l'émission d'un protocole de communication particulier.

3. Éolienne selon la revendication 1 ou 2, dans laquelle lesdits au moins deux gestionnaires de protocole sont compris dans un gestionnaire de protocole étendu unique (EPH) comprenant un moyen pour produire et interpréter des données liées à SCADA selon plusieurs protocoles de communication.

4. Éolienne selon la revendication 3, dans laquelle ledit gestionnaire de protocole étendu (EPH) détecte le type de protocole de communication d'un paquet de données reçu en extrayant des données de définition de protocole de communication à partir dudit paquet de données reçu et traite ledit paquet de données reçu selon lesdites données spécifiques de protocole de communication.

5. Éolienne selon l'une quelconque des revendications 3 à 4, dans laquelle lesdits au moins deux gestionnaires de protocole (PH) sont fusionnés dans ledit gestionnaire de protocole étendu comprenant un moyen pour traiter des données d'au moins deux protocoles de communication différents sans détermination spécifique de type de protocole de communication.

6. Éolienne selon l'une quelconque des revendications 1 à 5, dans laquelle l'un desdits protocoles de communication différents est basé sur des services Web à base de protocole SOAP.

7. Éolienne selon l'une quelconque des revendications 1 à 6, dans laquelle l'un desdits au moins deux protocoles de communication différents est l'un de ce qui suit : le protocole de Spécification de Messagerie Industrielle, MMS, le protocole de Liaison et d'Incorporation d'Objets, OLE, pour l'Accès à des Données de Commande de Processus, OPC XML-DA, la version 3 de Protocole de Réseau Distribué, DNP3, le protocole IEC 60870-5-104 de la Commission Électrotechnique Internationale, ou n'importe quelle combinaison de ceux-ci.

8. Éolienne selon l'une quelconque des revendications précédentes 1 à 7, dans laquelle au moins l'un desdits gestionnaires de protocole est distribué dans l'éolienne (1).

9. Éolienne selon l'une quelconque des revendications 1 à 8, comprenant au moins une interface SCADA (SI) vers au moins un serveur SCADA externe (SCS), ladite interface SCADA communiquant des données liées à SCADA et ladite interface SCADA comprend une interface SCADA multiprotocole permettant le codage et le décodage de données liées à SCADA selon au moins deux protocoles SCADA différents.

10. Éolienne selon la revendication 9, dans laquelle ledit serveur SCADA est lié à une station de commande de parc éolien.

11. Éolienne selon la revendication 9 ou 10, dans laquelle ledit serveur d'interface SCADA (SCS) est situé à l'intérieur de l'éolienne.

12. Procédé de production et d'interprétation de données liées à un Système d'Acquisition et de Contrôle de Données, SCADA, dans une éolienne (1) selon l'une quelconque des revendications 1 à 11, où la production et l'interprétation de données liées à SCADA sont effectuées par au moins deux gestionnaires de protocole de communication (PH) selon au moins deux protocoles de communication différents et dans lequel lesdits gestionnaires de protocole sont associés à des protocoles de communication différents et compris par une interface SCADA (SI), dans lequel les deux protocoles de communication différents sont utilisés simultanément et ont des priorités de communication différentes des données, le procédé comprenant les étapes de
- réception d'un paquet de données dans un gestionnaire de protocole lié à ladite éolienne,
- détermination du type de protocole de communication dudit paquet de données,
- traitement du paquet de données selon ledit type de protocole de communication.

13. Procédé de production et d'interprétation de données liées à SCADA selon la revendication 12, dans lequel ledit procédé comprend en outre l'étape de production d'une réponse selon ledit type de protocole de communication.

14. Procédé de production et d'interprétation de données liées à SCADA selon la revendication 12 ou 13, dans lequel un gestionnaire de protocole étendu détecte le type de protocole de communication d'un paquet de données reçu en extrayant des données de définition de protocole de communication à partir dudit paquet de données reçu et traite ledit paquet de données reçu selon lesdites données spécifiques de protocole de communication.

15. Procédé de production et d'interprétation de données liées à SCADA selon l'une quelconque des revendications 12 à 14, dans lequel lesdits gestionnaires de protocole sont compris par une interface SCADA (SI).
